Europäisches Patentamt

**European Patent Office**

**Office européen des brevets**

(19)

(11) Publication number: **0 038 680**

**A1**

(12)

# EUROPEAN PATENT APPLICATION

(21) Application number: **81301680.5**

(22) Date of filing: **15.04.81**

(51) Int. Cl.³: **A 01 G 9/14**

(30) Priority: **15.04.80 GB 8012325**

(43) Date of publication of application:
**28.10.81 Bulletin 81/43**

(84) Designated Contracting States:
**DE FR NL**

(71) Applicant: **Love, William**
**Silverstones Uffmoor Lane**
**Halesowen West Midlands(GB)**

(72) Inventor: **Love, William**
**Silverstones Uffmoor Lane**
**Halesowen West Midlands(GB)**

(74) Representative: **Meddle, Alan Leonard et al,**
**FORRESTER & BOEHMERT Widenmayerstrasse 4/I**
**D-8000 Munchen 22(DE)**

(54) Improvements in or relating to greenhouses.

(57) A greenhouse is provided with a roof which is capable of being moved between a raised position and a lowered position. Screening means is provided which is afforded by roller blinds (20), the roller/spindles of which are secured to the roof, whilst the terminations of which are secured, preferably releasably, to a peripheral ground-level wall. In this manner, on lowering of the roof (6), such as by power means (30), the sheet material of the roller blinds may be automatically wound onto the rollers, and when the roof is subsequently raised, the sheet material is automatically unwound. In this manner, the roof may be lowered to reduce heat losses, when the plants are small, and when entry is not required for the purpose of tending the plants.

FIG 2

EP 0 038 680 A1

Title: "Improvements relating to greenhouses"

This invention is concerned with improvements in or relating to greenhouses.

In a greenhouse, the rate of loss of heat is proportional to the exposed wall and roof areas. Greenhouses are conventionally fixed structures, and provide a large surface area through which heat is lost, even though for much of their use the height to which they extend is not required. Usually a greenhouse has a height which permits a person to walk into or through the greenhouse, without undue stooping: conversely, seeds, seedlings or small plants which are planted in the greenhouse seldom require this amount of height, particularly at early stages in their growing period, and this means that a large, unnecessary wall area is provided, through which heat losses occur.

According to this invention there is provided a greenhouse comprising a roof, power operated means to move the roof vertically between a raised position and a lowered position, a plurality of roller blinds carried by the roof unit, and securing means disposed on or adjacent to the ground with which the termination of the sheet material of the roller blinds is or may be engaged, said sheet material when the roof is raised affording wall sections of the structure.

By the term "roller blind" as used herein, we mean a device comprising a spindle adapted to be secured in fixed relationship to a mounting structure and which defines a longitudinal axis, a roller member mounted on the spindle, a length of sheet material connected at one end to the roller member, and resilient means to urge the roller member to rotate about said longitudinal axis so as to tend to wind the sheet material onto the roller member. The opposite end of the sheet material is provided with a termination, such as a batten, whereby tension may be applied generally uniformly to the sheet material across the width thereof, generally at right angles to the longitudinal axis, to unwind the sheet material from the roller member against the action of said resilient means. A conventional roller blind is provided with a device to render the resilient means inoperative, when the sheet material has been pulled from the roller to a desired length. In the context of this invention, such a device is preferably dispensed with.

Thus, in the greenhouse set out in the last preceding paragraph but one, with the roof in its raised position, and with the termination of the roller blinds engaged with said securing means, the material of the roller blinds affords wall sections of the greenhouse. The roof may be moved between its raised and lowered positions at will, raising movement of the roof causing the sheet material to be unwound from the roller blinds, whilst the terminations of the roller blinds are retained in said fixed relationship with the securing means, whilst on lowering movement of the roof, the sheet material is wound onto the roller blinds.

The sheet material of the roller blinds may be provided by heavy duty transparent or semi-transparent plastics material such as polythene. The roof unit may itself be moulded from plastics material, and may be transparent, semi-transparent or opaque.

In the use of this invention, with the roof in its raised position, a person may enter the greenhouse by disengaging the termination of one of the roller blinds from its securing means, allowing the roller blind to wind in the sheet material, to provide an opening or doorway. The person may then plant seeds, seedlings or small plants in the greenhouse, or may if already planted tend to the plants in the greenhouse and subsequent to stepping out from the greenhouse, will reconnect the termination of the said roller blind with said securing means. The roof may then be lowered to an appropriate height, dependent upon the height of the plants (if any) within the greenhouse.

Thus, by the use of this invention, the volume of the greeenhouse required to be maintained heated may be minimised. Since planting in greenhouses tends to take place early in the year, the roof may be retained in its lowered position for much of the time when the weather is at its coldest, and heat losses are likely to be highest.

The roof unit may be of relatively thick material, having a low coefficient of conductivity, and may be opaque. Thus, during night periods, when there is no sunlight, and when outside temperatures are likely to be lowest, the roof unit may be retained in its lowered position without detriment. The roof unit may then be moved at least some distance towards its raised position during daytime periods, to allow the passage of light through the wall sections of the greenhouse.

However, where crops requiring no or very little light are being grown, such as mushrooms, or whilst seeds are in their germination stage, the roof may be retained permanently in its lowered position, other than for tending purposes.

Alternatively, where the roof is transparent, it may be retained in its lowered position, until the plants or seedlings require more head room, whereupon the roof unit may be raised by a small amount. The roof may be moved to its fully raised position for tending purposes, or for harvesting of the planted crop.

Preferably the power-operated means comprises a fluid operated piston/cylinder device. Either the cylinder or piston may be mounted in a well in the ground, or the device may be telescopic. Preferably the power-operated means may be operated to raise the roof to any desired height between the fully raised and fully lowered positions.

At the corners of the structure, adjacent wall sections may be in perpendicular abutting relationship. However where it is desired to afford a more secure seal against environmental conditions, the structure may comprise corner sections extending downwardly from the roof at the corners of the structure, which corner sections at each corner are capable of relative telescopic collapsing movement. Thus the corner sections may be of right angle shape, with the adjacent wall sections at each corner overlapping with one of the sides of the corner sections.

Alternatively there may be provided at the corners fixed webs of flexible material extending downwardly from the roof at the corners of the structure, which when the roof is raised are under tension. Such webs of flexible material may also be of L-shape, with adjacent wall sections at each corner in overlapping relationship with one side of the web. When the roof is lowered, whilst the wall sections will be rolled up, such webs will collapse, and fold inwardly.

For a greenhouse covering a large area, a plurality of wall sections may be provided on at least the larger sides of the structure, with adjacent wall sections in overlapping relationship.

Preferably the greenhouse comprises one roller blind, the termination of which is adapted to be releasably secured to the securing means and which may be released from the securing means when the roof is in its raised position, for the roller blind to wind the sheet material in, to afford an openable door to the structure.

Alternatively or in addition, the termination of all the roller blinds are adapted to be releasably secured to the securing means, and which may be released from the securing means when the roof is in its raised position, to open the sides of the structure when the roof is in its raised position.

There will now be given a detailed description of this invention, of a greenhouse which is a preferred embodiment of this invention and which has been selected to illustrate the invention by way of example.

In the accompanying drawings:-

FIGURE 1 is a schematic perspective view of a greenhouse which is the preferred embodiment of this invention;

FIGURE 2 is a schematic vertical sectional view of the structure shown in Figure 1;

FIGURES 3 and 4 are part views on an enlarged scale, showing details of construction of the preferred embodiment;

FIGURE 5 shows an alternative construction to that shown in Figure 4;

FIGURES 6 , 7 and 8 show an overlap construction which may be used in certain circumstances in the first embodiment; and

FIGURE 9 is a schematic perspective view illustrating the application of this invention to a greenhouse of larger size.

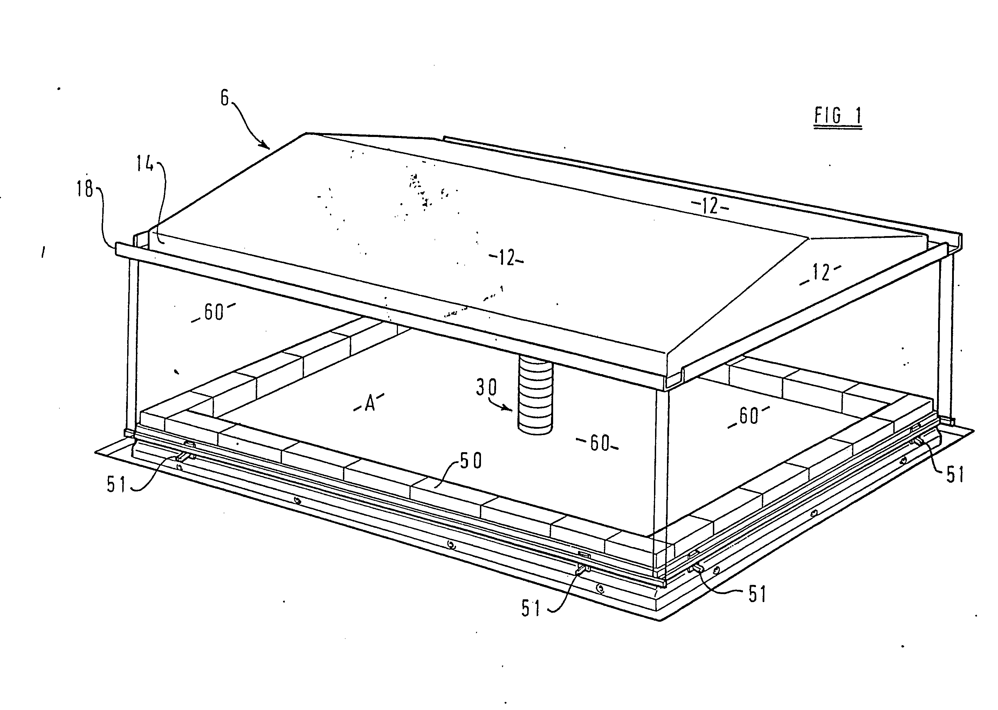

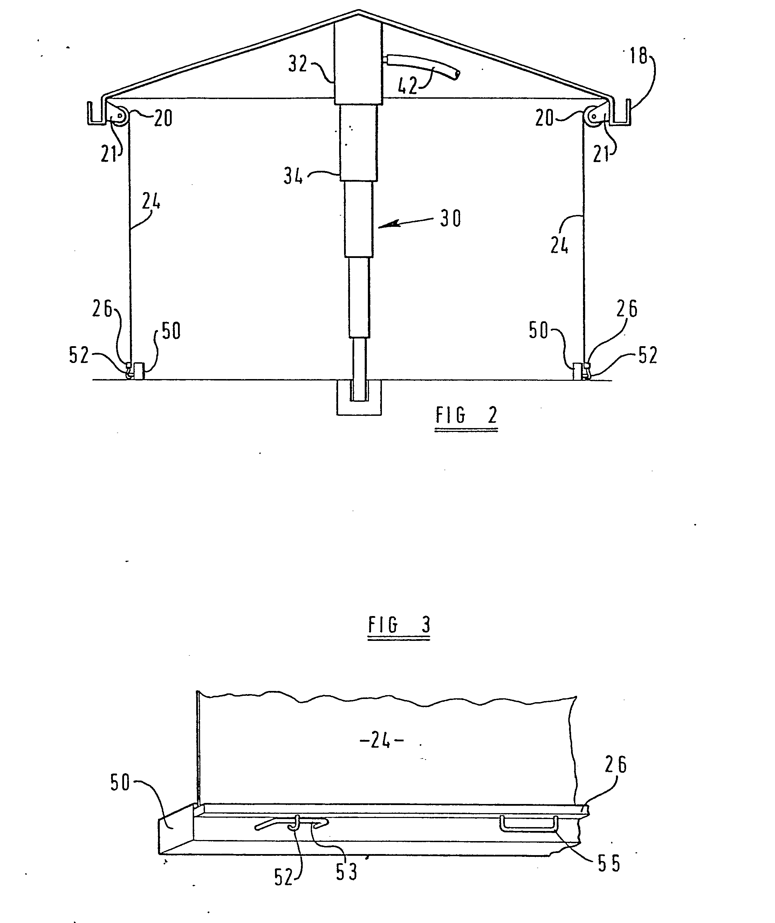

The greenhouse which is the preferred embodiment of this invention is adapted to enclose a ground area A in which seeds or small plants are to be grown. The greenhouse comprises a gabled roof unit 6, preferably of rectangular plan view, typically 9m x 6m. The roof unit 6 comprises a longitudinal supporting strut, transverse supporting struts, and a covering 12 comprising sheets of rigid, transparent plastics material such as "perspex". The roof unit preferably also comprises a downwardly extending peripheral lip 14, shown in Figures 1 and 2 which conveniently supports guttering 18.

Secured along each side of the roof unit 6, within the peripheral lip 14, is a roller blind 20, (see Figure 2). Conveniently the roller blinds are mounted on brackets 21, extending from the roof unit.

Each roller blind 20 comprises a spindle adapted to be secured to the brackets 21, defining a longitudinal axis, and a roller member mounted on the spindle, a length of transparent polythene sheet 24 being connected at one end to the roller member. Means is provided to urge the roller member to rotate about said longitudinal axis, so as to tend to wind the polythene sheet onto the roller member. The opposite end of the polythene sheet is provided with a termination, which in the preferred embodiment is in the form of a batten 26 (Figure 2).

However, in their use in the present invention, roller blinds are used in which the conventional catch, which may be operated to render the rewind mechanism inoperative, is dispensed with.

The greenhouse which is the preferred embodiment of this invention comprises means to move the roof unit vertically between a raised position (shown in Figure 1) and a lowered position, said means comprising an hydraulically operated piston/cylinder device 30, the cylinder 32 of which is secured to the roof unit between longitudinal and transverse struts, with the piston 34, which may be telescopic, extending downwardly from said cylinder 32. By the application of fluid under pressure to the cylinder 32, from an hydraulic power unit (not shown) and by way of a fluid pipe 42, the piston 34 may be fully extended, to support the roof unit 6 at a convenient height from the ground, typically 3m to the eaves, or may be raised to any intermediate position.

However, alternative to the use of a telescopic piston, a single-stage hydraulic device may be used, with the cylinder rigidly secured in a centrally positioned hole in the ground.

Extending around the ground area A is a peripheral wall 50, provided on the interior face thereof at spaced intervals, with retaining means. In Figure 1 the retaining means is shown as provided by catches 51, wherein in Figure 2 as provided by the brackets 53 mounted on the peripheral wall 50, with which hook members 52 secured to the terminations 26 of the roller blinds may be engaged, see Figure 3. Thus, in the assembly of the greenhouse, the termination 26 of each roller blind 20 may be drawn away from the roller, conveniently by use of a handle 55 extending the polythene sheet 24, and the batten 26 may be hooked behind two or more of the brackets 53, the resilient means of the roller blind 20 retaining the sheet 24 under tension. Conveniently this operation is carried out with the roof unit 6 in its raised position, whereupon the roller blinds will provide side walls 60 extending around the greenhouse, between the roof unit and the peripheral wall 50.

By manual operation of control means on the power unit, hydraulic pressure within the cylinder 32 may be vented, allowing the telescopic piston 34 to collapse, and the roof unit 6 to lower under its own weight. As the roof unit 6 approaches the peripheral wall 50, surplus sheet material 24 will be taken in by the winding up of its associated roller blind 20, retaining the side walls 60 under tension at all times.

In the use of the greenhouse which is the embodiment of this invention, with the roof unit 6 in its raised position, the batten 26 of one roller blind may be released from its securing means 53, allowing the sheet material to be wound onto the roller member, to provide an open doorway. This allows a person to enter the space enclosed by the roof unit 6 and side walls 60, to plant seeds, seedlings, small plants, or to tend to existing seedlings, to carry out for example weeding and/or watering operations. Upon completion of his duties, and subsequent to stepping out of the greenhouse, the person will grasp the handle 55 secured to the batten 26 of the roller blind and pull downwardly, extending the sheet material thereof, and will resecure the hooks 52 of the batten 26 behind its associated brackets 53 closing the entrance to the greenhouse.

By operation of the controls of the power unit the roof unit 6 may be lowered, to an extent appropriate to the height of plants within the greenhouse. Where the plants or seedlings are of small stature, or when seeds have recently been planted, the roof unit 6 may be fully lowered, to a position adjacent to the ground, minimising heat losses from the greenhouse. The roof unit 6 may be subsequently raised, as is necessary for tending purposes, or to accommodate growth of the plants within the greenhouse.

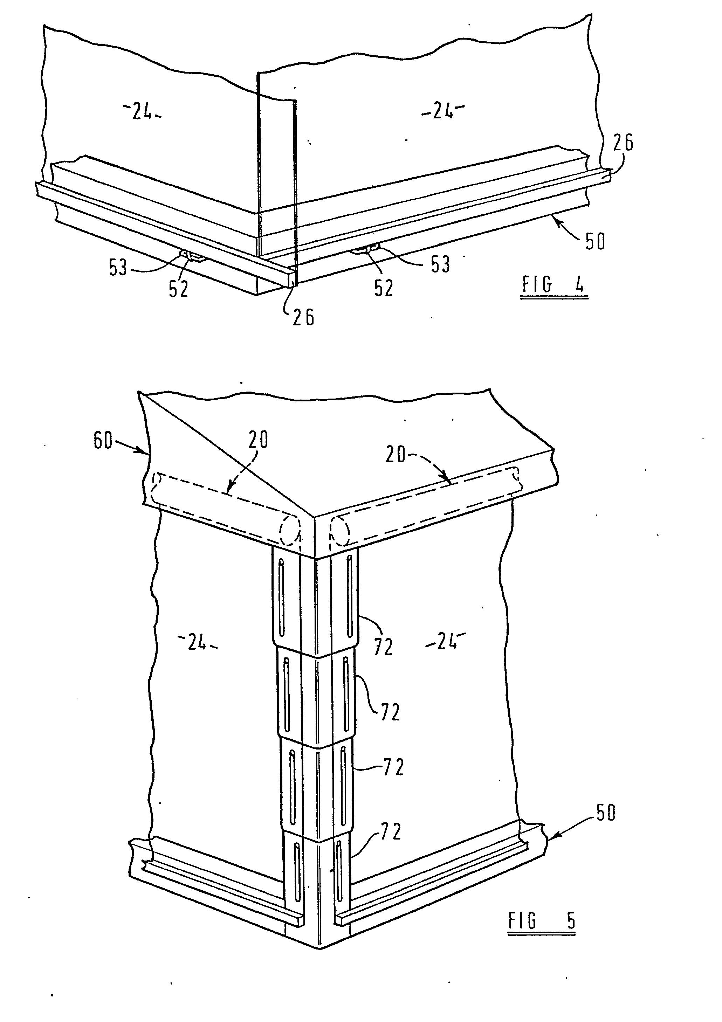

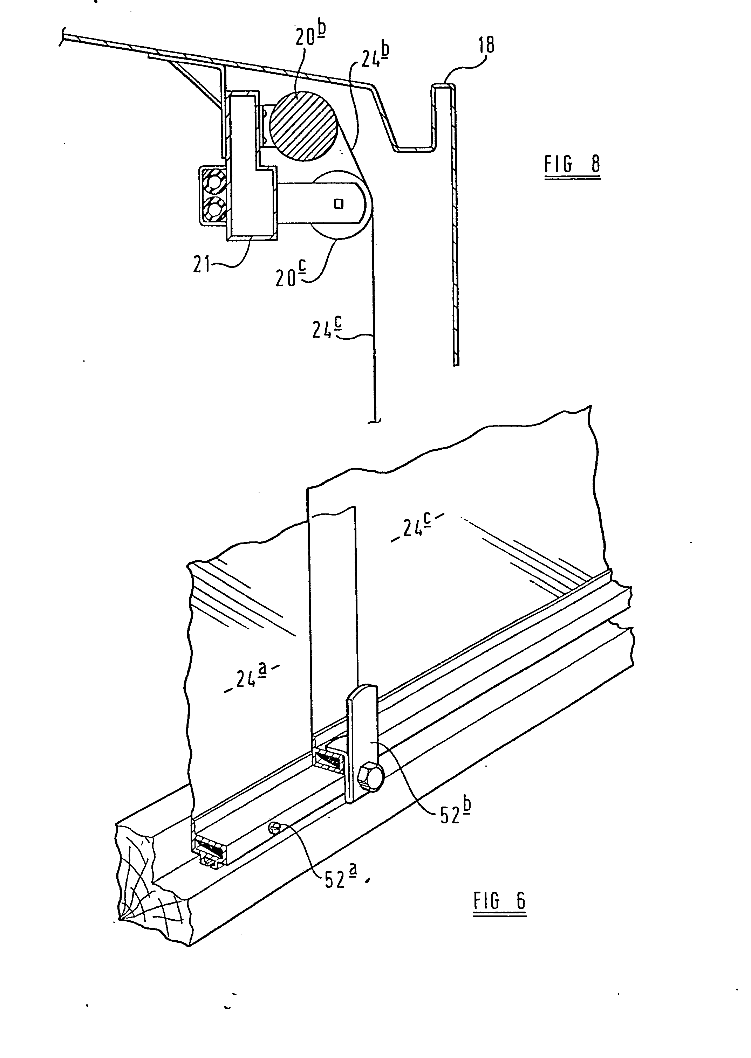

At the four corners of the greenhouse, the roller blinds may be arranged so that their respective sheets are in abutting relationship, as shown in Figure 4. However, to minimise further heat losses from the greenhouse by flow of air into the greenhouse at the corner regions, conveniently at each of the corner regions there is provided a telescopic corner arrangement, as is shown in Figure 5, secured to and extending between the roof unit 6 and the peripheral wall 50 at said corners, each corner arrangement conveniently comprising a number of elongate members 52 of L-shape in cross section secured together for relative telescopic movement, the uppermost of said members 72 being secured on the inside of the peripheral lip 14, with the sheet material extending downwardly between the member 72 on the outer side thereof and the peripheral lip, and the lowermost being releasably secured to the peripheral wall 50. Additional to the reduction of heat loss through the corner regions, said corner arrangements also increase the stability of the greenhouse as a whole.

Alternatively, the members 72 may be replaced by a strip of flexible material such as plastics, secured to the roof section 6 and to the peripheral wall 50 at the corners of the structure, in such a manner that when the roof is in its raised position, said material adopts a generally L-shapeed configuration in cross-section, somewhat similar to that adopted by the members 72. The sheet material 24 of two roller blinds will overlap with such a strip, tending to reduce entry of wind to the interior of the structure. When the roof is lowered, the strip will collapse generally inwardly, and will not impede lowering of the roof 6.

If desired, there may be provided on either side of the greenhouse, bounded by a further peripheral wall, are two "hardening off" areas. The piston 34 may be received within a centrally-positioned boss 36, and by releasing the battens 26 of all of the roller blinds 20 from the hook members 52, and by disconnecting the corner arrangements from the peripheral wall 50, the roof unit as a whole may be rotated through $90^0$, so that the roof unit overlies the central area A, and the two "hardening off" areas, leaving two further areas in positions originally at the ends of the greenhouse exposed for the "hardening off" of small plants. The corner arrangements may be secured to the walls 54, as may be the battens 26 of the roller blinds provided at the ends of the roof unit, the battens 26 of those roller blinds along the sides of the greenhouse being secured to walls 56 extending between the walls 54.

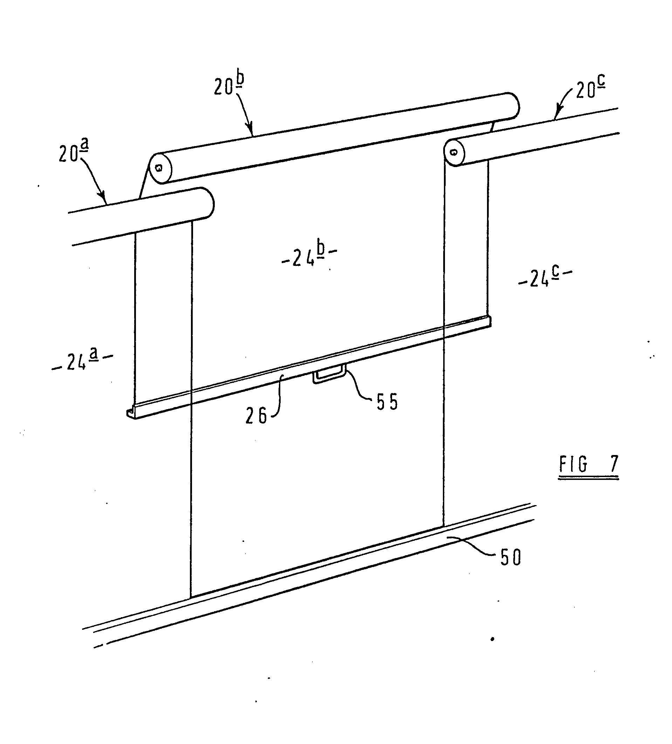

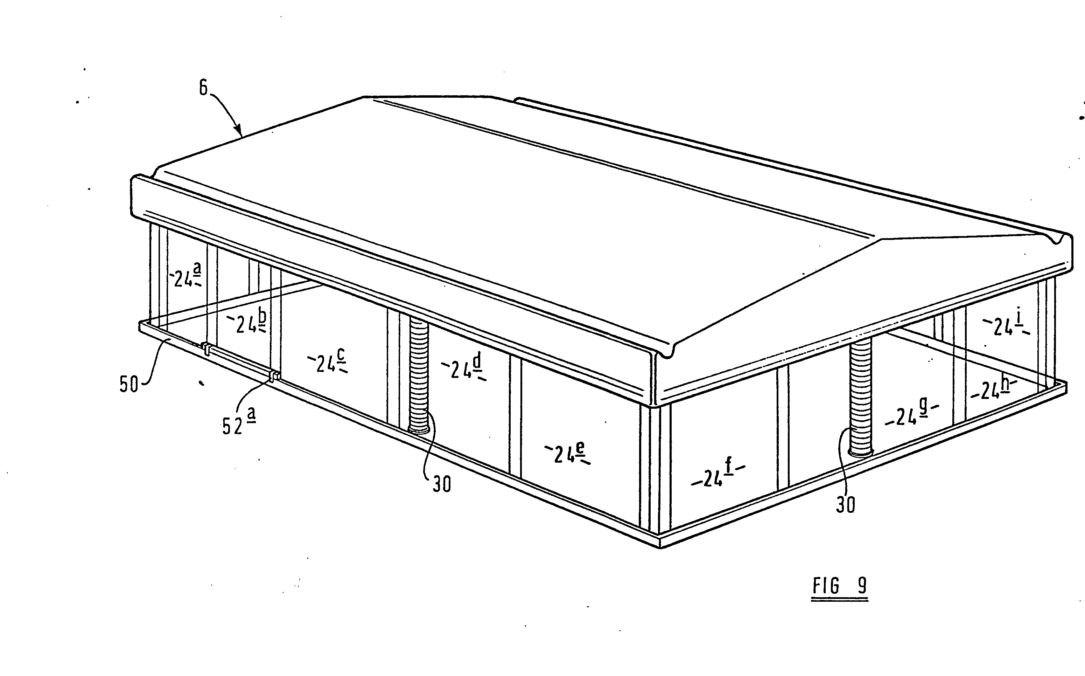

Whilst the greenhouse which is the preferred embodiment of this invention comprises a single roller blind providing each of the four walls of the structure, in certain circumstances it may be desired to use more than one roller blind on one or more sides of the structure. An arrangement is illustrated in Figures 6, 7 and 8 in which overlapping roller blinds are used, to provide together a side wall of the structure. For example, one side wall of the structure may be provided by three roller blinds 20a, 20b, 20c, the central one of which 20b is located at a higher position than the other two, which two are preferably mounted co-axially (see Figure 8). Said central roller blind 20b is additionally mounted somewhat rearwardly (inwardly) of the other two so that the sheet material 24b of which passes over the edge portions of the other two roller blinds, ensuring good face-to-face contact between the sheets 24a and 24b and between the sheets 24b and 24c.

In constructions of this kind, the terminations 26 of some of the roller blinds may be more permanently secured to the peripheral wall 50 of the structure, as is illustrated in Figure 6, whilst the termination of the roller blind 20b may be releasably secured, conveniently by catch means 52b, Figure 6. In this manner, said central roller blind 20b and the sheet material 24b thereof may afford a readily-openable door to the interior of the structure, being moved to open and close the space between the sheets 24a and 24c in a manner hereinabove described. In such circumstances, although for most of the time the remaining sheets 24, which afford the fixed side walls of the structure, will be in their lowered positions, there may well be circumstances where it becomes convenient to raise the side walls whilst the roof unit is in its upper position, which may readily be accomplished by removing the catch screws (such as that 52a as shown in Figure 6) allowing the spring means of the roller blind to wind the sheet material 24a around the spindle of the roller blind.

It has been found that when a thick transparent plastics such as polyethylene is used for the sheet material 24, and when the arrangement of the roller blinds and their points of securement to the peripheral wall are such as to ensure face-to-face contact between the overlapping edge portions, that the natural mutual attraction between the overlapping sheets is sufficient to ensure good contact, with little tendency for wind to separate the overlapping sheets. However, in certain circumstances, particularly in structures where, other than for the door, it is generally desired to maintain the roller blinds in their lowered positions, thin sheets of adhesive may be interposed between overlapping sheets of plastics material, to ensure that separation between the overlapping sheets does not take place.

Figure 9 illustrates the application of this invention to a greenhouse of larger size.

CLAIMS:

1.  A greenhouse comprising a roof (6), power operated means (30) to move the roof (6) vertically between a raised position and a lowered position, a plurality of roller blinds (20) carried by the roof, and securing means (53) disposed on or adjacent to the ground with which the termination (26) of the sheet material (24) of the roller blinds is or may be engaged, said sheet material when the roof (6) is in its raised position affording wall sections of the structure.

2.  A greenhouse according to Claim 1 comprising two or more roller blinds (21a,21b,21c) extending along each side of the structure, the sheet material (24a,24b; 24b,24c) of which roller blinds when the roof is in its raised position and the terminations (26) thereof are secured to the securing means (53), being in overlapping relationship.

3.  A greenhouse according to one of Claims 1 and 2 wherein the termination of one or more roller blind (20) is adapted for ready release from the securing means (53).

4.  A greenhouse according to any one of the preceding claims wherein the terminations of all of the rollers blinds are releasably secured to the securing means.

5.  A greenhouse according to any one of the preceding claims wherein, when the roof is in its raised position and the terminations of the roller blinds are secured to the securing means, the sheet material of adjacent roller blinds at the corners of the structure are in generally mutually perpendicular abutting relationship.

6. A greenhouse according to any one of the preceding claims comprising a collapsible arrangement at each of the corners of the structure, said arrangement when the roof is raised providing mutually perpendicular flanges with each of which the sheet material (24) of one of the roller blinds at said corner is in overlapping relationship.

7. A greenhouse according to Claim 6 wherein the corner arrangement comprises a plurality of telescopically mounted brackets (72).

8. A greenhouse according to Claim 6 wherein said corner arrangement comprises a strip of flexible material connected to and extending between the roof (6) and ground.

9. A greenhouse according to any one of the preceding claims comprising a peripheral wall (50) extending around the structure at ground level, to which said securing means (53) is secured.

10. A greenhouse according to any one of the preceding claims wherein the power-operated means (30) may be operated to raise the roof to any position between its fully raised and fully lowered positions.

11. A greenhouse according to any one of the preceding claims wherein the roller blinds each comprise a spindle adapted to be secured in fixed relationship to a mounting structure (21) and which defines a longitudinal axis, a roller member mounted on the spindle, a length of sheet material (24) connected at one end to the roller member, and resilient means to urge the roller member to rotate about said longitudinal axis so as to tend to wind the sheet material onto the roller member, the opposite end of the sheet material being provided with a termination by which tension may be applied generally uniformly to the sheet material (24) across the width thereof generally at right angles to the longitudinal axis, to unwind the sheet material from the roller member against the action of said resilient means, the construction and arrangement being such that with the roof in its raised position and the termination of the roller blinds secured to the securing means, on lowering movement of the roof the resilient means of the roller blinds winds the sheet material thereof onto the rollers thereof.

FIG 1

6

14

18

-12-

-12-

-12-

-60-

30

-A-

-60-

-60-

50

51

51

51

51

FIG 2

FIG 3

FIG 4

FIG 5

0038680

0038680

FIG 8

FIG 6

FIG 7

20$^{\underline{b}}$

20$^{\underline{c}}$

20$^{\underline{a}}$

−24$^{\underline{b}}$−

−24$^{\underline{c}}$−

−24$^{\underline{a}}$−

26

55

50

FIG 9

0038680

**0038680**

| European Patent Office | EUROPEAN SEARCH REPORT | Application number<br>EP 81 30 1680.5 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.³) |
|---|---|---|---|
| A | <u>DE – C – 949 783</u> (H. MARSMANN)<br>* page 2, lines 18 to 32 ;<br>fig. 1 to 4 *<br>———— | 1 | A 01 G 9/14 |
| | | | **TECHNICAL FIELDS SEARCHED (Int. Cl.³)**<br><br>A 01 G 9/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| ✗ | The present search report has been drawn up for all claims | |
|---|---|---|
| Place of search<br>Berlin | Date of completion of the search<br>25-06-1981 | Examiner<br>SCHOFER |

EPO Form 1503.1  06.78